# EUROPÄISCHE PATENTSCHRIFT

(11) **EP 2 501 481 B1**
(45) Veröffentlichungstag und Bekanntmachung des Hinweises auf die Patenterteilung: **02.09.2015**
(21) Anmeldenummer: 10779692.2
(22) Anmeldetag: 30.10.2010
(51) Int. Cl.: B04B 1/20

(54) **VORRICHTUNG ZUM ZERKLEINERN ODER MAHLEN**
DEVICE FOR COMMINUTING OR GRINDING
DISPOSITIF DE FRAGMENTATION OU DE BROYAGE

(30) Priorität: 21.11.2009 DE 102009054215
(43) Veröffentlichungstag der Anmeldung: 26.09.2012
(73) Patentinhaber: IKA - Werke GmbH & Co. KG, 79219 Staufen (DE)
(72) Erfinder: JÄGLE, Peter, 79282 Ballrechten-Dottingen (DE); BIERHALS, Henry, 79114 Freiburg (DE)
(74) Vertreter: Kunst, Manuel Nikolaus Johannes
(86) Internationale Anmeldenummer: PCT/EP2010/006650
(87) Internationale Veröffentlichungsnummer: WO 2011/060882

(56) Entgegenhaltungen:
- DE-A1- 19 650 441
- GB-A- 810 485
- US-A- 3 612 414
- US-A- 3 785 579
- US-A- 5 636 923

## Beschreibung

Die Erfindung betrifft eine Vorrichtung zum Zerkleinern oder Mahlen von Mahlgut, insbesondere von harten, spröden oder versprödeten Partikeln oder Stoffen, mit einem Behältnis zur Aufnahme des Mahlgutes und mit einem in diesem Behältnis während des Zerkleinerns oder Mahlens rotierenden Werkzeug sowie mit einem Antrieb für dieses Werkzeug, wobei das Behältnis mit dem Werkzeug zusammen lösbar mit dem Antrieb kuppelbar ist und das Werkzeug in dem Behältnis in von dem Behältnis gelöster oder abgekuppelter Lage angeordnet und/oder lose drehbar und in Gebrauchsstellung durch die Kupplung mit dem Antrieb drehfest verbunden und zentriert ist.

Eine vergleichbare Vorrichtung ist aus der US-A-3 785 579 bekannt, wobei allerdings das Behältnis keinen Boden hat, sondern das Werkzeug in einem separaten Halteteil gelagert ist, dass mit dem unten offenen Behälter in Gebrauchsstellung verbunden und abgedichtet ist.

Derartige Vorrichtungen, zum Beispiel Mühlen, sind vor allem im Bereich der Durchführung von Analysen bekannt und dienen dazu, bestimmte Mahlgüter für den Analysevorgang zu zerkleinern. Bei den bekannten derartigen Vorrichtungen oder Mühlen ist das Aufnahme-Behältnis mit einem Gehäuse für den Antrieb derart verbunden, dass nach einem Zerkleinerungs- oder Mahlvorgang das Behältnis und das darin befindliche Werkzeug sorgfältig gereinigt werden müssen, um für weitere Mahl- oder Zerkleinerungsvorgänge zur Verfügung zu stehen. Dies kann vor allem bei kontaminierten oder giftigen Stoffen sehr aufwendig sein und unter Umständen nicht vollständig gelingen, weil insbesondere im Bereich des Werkzeuges befindliche Dichtungen zur Trennung des Inhaltes des Behältnisses von dem Antrieb unter Umständen Anteile solcher Stoffe aufnehmen oder weil solche Bereiche für die Reinigung selbst nur schwer zugänglich sind. Ein entsprechend großer Zeitverlust tritt zwischen zwei nacheinander durch-zuführenden Zerkleinerungs- oder Mahlvorgängen insbesondere wegen dieser Reinigung auf.

Es besteht deshalb die Aufgabe, eine Vorrichtung der eingangs genannten Art zu schaffen, mit welcher Mahlvorgänge nacheinander in kürzeren Zeitabständen durchgeführt werden können.

Diese Aufgabe wird mit den Mitteln und Merkmalen des Patentanspruchs 1 gelöst.

Demgemäß ist die eingangs definierte Vorrichtung dadurch gekennzeichnet, dass eine an dem Werkzeug angreifenden Welle durch den Boden oder eine Wand des Behältnisses nach außen oder unten verläuft und einen Kupplungsfortsatz hat oder trägt, der mit einem an dem Antrieb drehfest angeordneten Gegenkupplungsstück zentrierend und kraft- und/oder formschlüssig zusammensteckbar ist, dass der Kupplungsfortsatz und das Gegenkupplungsstück mittels nach außen oder radial vorstehenden Vorsprüngen und dazu passenden, in axialer Richtung offenen, Hinterschneidungen aufweisenden Aufsparungen verrastbar sind und dass die zur Verrastung mit dem jeweiligen Vorsprung vorgesehene Aussparung an einer Stelle der Kupplung angeordnet ist, bei der der Kupplungsfortsatz und das Gegenkupplungsstück unter einer gegenseitigen axialen Kraft zusammengehalten und der dem Kupplungsfortsatz benachbarte Boden oder Wandbereich des Behältnisses an eine die Welle umfassende Dichtung angedrückt sind.

Durch eine derartige Anordnung ist es möglich, das Behältnis und das Werkzeug sehr preiswert zu gestalten, zumal das Werkzeug gegenüber dem Behältnis nicht gelagert sein muss. Vielmehr erfolgt die Zentrierung des Werkzeuges und auch die des Behältnisses erst durch die Kupplung mit dem Antrieb, sodass dieses Behältnis mit dem Werkzeug auch problemlos schon nach einem einmaligen Gebrauch entsorgt und durch ein neues Behältnis mit Werkzeug ersetzt werden kann, sodass eine Reinigung entfallen kann. Der Zeitgewinn ist dabei in der Regel wertvoller als das entsorgbare Behältnis, welches also gegen ein derartiges Behältnis mit Werkzeug austauschbar ist. Außerdem ergibt sich der Vorteil, dass eine Reinigung entfallen kann, was vor allem bei giftigen oder kontaminierten Stoffen auch für die Benutzer als vorteilhaft anzusehen ist.

Es ist aber auch möglich, das Behältnis mit Werkzeug nach einem Bearbeitungsvorgang zu lösen und sofort durch ein anderes derartiges Behältnis mit Werkzeug zu ersetzen, sodass das benutzte Behältnis in aller Ruhe gereinigt werden könnte. Es gehört also zur Erfindung, dass das Behältnis mit Werkzeug entweder gegen ein neues oder gegen ein gereinigtes Behältnis austauschbar ist.

Da die an dem Werkzeug angreifende Welle durch den Boden oder eine Wand des Behältnisses nach außen oder unten verläuft und einen Kupplungsfortsatz hat oder trägt, kann das Lösen oder Verbinden das Behältnisses und des Werkzeugs mit dem Antrieb schnell und einfach durchgeführt werden.

Der Kupplungsfortsatz und das Gegenkupplungsstück können zumindest bereichsweise zylindrisch und dazu benachbart sich verjüngend oder konisch ausgebildet sein derart, dass in Gebrauchsstellung Außenkonus und Innenkonus einerseits und die zylindrischen Bereiche andererseits einander zumindest über einen Teil Ihres Umfanges berühren. Somit ergibt sich beim Zusammenstecken eine gute und sichere Zentrierung.

Der Kupplungsfortsatz an der Welle des Werkzeugs kann als an seiner dem Werkzeug abgewandten Stirnseite offener Hohlzylinder ausgebildet sein, der sich zu der Welle hin verjüngt, und das Gegenkupplungsstück kann einen zu der Verjüngung oder dem Konus in dem Kupplungsfortsatz passendes Konusstück aufweisen, das koaxial an einem zylindrischen Bereich angeordnet ist, dessen Querschnitt etwa dem größten Querschnitt des konischen Bereichs entspricht. In zusammengestecktem Zustand sorgen die Konusbereiche für de Zentrierung und die zylindrischen Bereiche in noch zu beschreibender Weise neben einer Stabilisierung auch für die Übertragung von Halte- und Drehkräften.

Mit Hilfe der mit Hinterschneidungen verrastbaren Vorsprünge wird einerseits eine Drehmomentenübertragung ermöglicht und andererseits durch den Verrastungsvorgang in axialer Richtung auch eine Kraft ausgeübt, durch welche die Kupplung zusammengezogen und zusammengehalten und eventuell eine Dichtung im Bereich der Welle zusammengedrückt werden. Durch eine einfache und schnelle Steckbewegung werden also die erforderlichen Zentrier- und Dichtungsmaßnahmen wirksam und anschließend kann der Antrieb das Drehmoment auf das nun gespannte und fixierte Werkzeug übertragen. Dennoch ist auch das Lösen einfach, weil die gekuppelten Teile nur unter Überwindung der Rastkraft auseinandergezogen werden müssen, wozu notfalls auch ein Werkzeug zu Hilfe genommen werden kann.

Eine zweckmäßige Ausgestaltung der erfindungsgemäßen Vorrichtung und insbesondere des Kupplungsbereiches kann dabei vorsehen, dass das Gegenkupplungsstück wenigstens zwei radial abstehende Vorsprünge mit vorzugsweise kreisrundem Querschnitt und der Kupplungsfortsatz Schlitze aufweist, die sich in Einsteckrichtung erweitern, wobei die Erweiterung eine Abmessung etwa entsprechend einem Vorsprung hat und in Einsteckrichtung vor dem Vorsprung eine rastend überwindbare Engstelle angeordnet ist. Beim Zusammenstecken muss also die Engstelle über den Vorsprung oder relativ zu diesem verschoben werden, was unter einer gewissen Verdrängung oder elastischen Nachgiebigkeit des Werkstoffs möglich ist, bis der jeweilige Vorsprung in die Erweiterung der Kupplungsöffnung einrastet. Dabei ist die bevorzugte Anordnung die Anbringung der Vorsprünge an dem Gegenkupplungsstück, jedoch könnte auch umgekehrt das Gegenkupplungsstück die Rastschlitze und der Kupplungsfortsatz die Vorsprünge haben.

Die Ausnehmungen an dem Kupplungsfortsatz können Einlaufschrägen haben, die zu den Engstellen führen. Somit ist das Zusammenstecken weiter vereinfacht, weil der Benutzer die Vorsprünge und die diese aufnehmenden Schlitze nicht ganz genau in Übereinstimmung bringen muss, sondern die Einlaufschrägen die Vorsprünge beim Zusammenstecken in die richtige relative Orientierung bringen.

Für einen Konus und eine sich verjüngende Innenöffnung aufweisende Kupplungsteile können zwei radial vorstehende Vorsprünge an dem Gegenkupplungsstück - oder gegebenenfalls an dem Kupplungsfortsatz - vorgesehen sein. Zusammen mit den konischen Berührbereichen ergibt dies eine statische Bestimmtheit dieser Kupplung.

Eine abgewandelte Ausführungsform kann vorsehen, dass der Kupplungsfortsatz und das Gegenkupplungsstück über ihre gesamte Wirklänge mit gleichbeleibenden Querschnitten zusammenpassen und drei radial abstehende Vorsprünge mit Schlitzen und Öffnungen beim Zusammenstecken verrastbar sind. Auch dies ergibt eine statische Bestimmtheit.

Günstig ist es, wenn der Antrieb - geschützt - in einem Gehäuse angeordnet und das Behältnis und dieses Gehäuse lösbar verbindbar sind, wobei die Löse- und Verbindungsbewegung auch zum Lösen oder Verbinden der Kupplung dient.

Die Verbindung des Behältnisses und des Gehäuses kann aus einer ersten axialen Steckbewegung und einer wenigstens über einen Winkelbereich erfolgenden Drehbewegung zusammengesetzt sein und die Steckbewegung kann synchron mit dem Zusammenstecken des Kupplungsfortsatzes mit dem Gegenkupplungsstück sein. Somit braucht der Benutzer das Behältnis nur in vorgesehener Weise mit dem Gehäuse des Antriebes zusammenzustecken um auch schon Antrieb und Werkzeug gekuppelt und verbunden zu haben.

Für die Verbindung zwischen dem Behältnis und dem Gehäuse kann ein Bajonettverschluss vorgesehen sein. Bei einem Bajonettverschluss ist zunächst eine Axialbewegung für die Schließbewegung erforderlich, die die erwähnte Steckbewegung ist, wonach dann noch eine relative Teilverdrehung erfolgt. An dem Behältnis kann benachbart zu einem in Gebrauchsstellung unteren Rand wenigstens ein radial abstehender, zu der Haltekurve des Bajonettverschlusses passender Vorsprung angeordnet sein und die Haltekurve an dem Gehäuse des Antriebs kann einen vertikalen Eintritt und einen in Umfangsrichtung insbesondere schräg verlaufenden Abschnitt haben. Für eine bessere Befestigung können zwei derartige Vorsprünge mit zwei einander bevorzugt am Umfang gegenüberliegenden Haltekurven zusammenwirken.

Die Schrägung der Haltekurve des Bajonettverschlusses kann über einen Umfangsbereich und dabei über einen Höhenbereich verlaufen, der der Einrastbewegung des Kupplungsfortsatzes wenigstens teilweise entspricht. Beim Zusammenstecken kann also die Kupplung von Welle und Antrieb schon teilweise erfolgen und durch das Verdrehen des Bajonettverschlusses vollendet werden. Gleichzeitig wird dadurch auch die gesamte Kupplung gegen ungewolltes Lösen gesichert. Durch entsprechende Gestaltung des Bajonettverschlusses kann also erreicht werden, dass die Kupplung und Verrastung des Kupplungsfortsatzes und des Gegenkupplungsstücks praktisch automatisch durch Betätigung dieses Bajonettverschlusses erfolgt.

Im Bereich des Durchtritts der Welle für das Werkzeug kann als Dichtung ein diesen Durchtritt umschließender und beaufschlagender Dichtring vorgesehen sein, der beim Verbinden des Behältnisses mit dem Gehäuse des Antriebs insbesondere durch das Werkzeug in axialer Richtung beaufschlagbar und/oder zusammendrückbar ist, sodass er in dieser Position dann auch eine gute Dichtwirkung hat. Die entsprechende Verformung des Dichtrings erfolgt dabei praktisch automatisch durch das Zusammenfügen des Kupplungsfortsatzes und des Gegenkupplungsstücks und die dabei bewirkte axiale Kraft.

Der Dichtring kann beispielsweise wenigstens teilweise aus Schaumstoff bestehen und an wenigstens einer Stirnseite oder an der dem Werkzeug zugewandten Stirnseite reibungsarm, beispielsweise durch Beschichtung oder Beflockung, ausgebildet sein. Somit wird die Relativbewegung zu dem rotierenden Werkzeug möglichst wenig beeinträchtigt.

Es sei noch erwähnt, dass in dem vorzugsweise austauschbaren Behältnis oberhalb dem das Mahlgut aufnehmenden und das Werkzeug aufweisenden Raum ein den Innenraum des Behältnisses begrenzender, in Ausgangslage auf dem Mahlgut ruhender Teller vorgesehen sein kann, der eine Anpassung des Innenraums an die Menge des Mahlguts ermöglicht oder erleichtert. Dabei kann für den über oder auf dem Mahlgut befindlichen Teller ein sein Absinken nach unten begrenzender Anschlag vorgesehen sein, um eine Kollision mit dem Werkzeug auszuschließen. Der Teller kann also während des Mahlvorganges und der damit gleichzeitig stattfindenden Verminderung des Volumens automatisch den Mahlraum verkleinern.

Die dem Mahlgut zugewandte Seite des Tellers kann Profilierungen oder Aufrauungen oder dergleichen Verformungen zur Unterstützung des Mahl- oder Zerkleinerungsvorgangs aufweisen. Das Mahlgut wird dann zweckmäßigerweise von dem Werkzeug und aber auch von der rauen Seite des Tellers entsprechend beaufschlagt.

Vor allem bei Kombination einzelner oder mehrerer der vorbeschriebenen Merkmale und Maßnahmen ergibt sich eine erfindungsgemäße Vorrichtung zum Zerkleinern oder Mahlen, bei welcher der Reinigungsaufwand verringert oder gar vermieden werden kann, indem das Behältnis mit dem Werkzeug von dem Antrieb trennbar und austauschbar ist, sodass es entweder als preiswertes Einmalbehältnis schon nach einer Bearbeitung entsorgt werden kann oder nach einer Bearbeitung gegen ein frisches oder gereinigtes Behältnis ausgetauscht und dann gründlich für einen nächsten Mahlvorgang vorbereitet werden kann.

Nachstehend ist ein Ausführungsbeispiel der Erfindung an Hand der Zeichnung näher beschrieben. Es zeigt in zum Teil schematisierter Darstellung:
- Fig. 1:: eine erfindungsgemäße Vorrichtung zum Zerkleinern oder Mahlen von Mahlgut mit einem Behältnis mit Werkzeug, welches Lösbar mit einem Antrieb kuppelbar ist, im Längsschnitt,
- Fig. 2:: eine schaubildliche Draufsicht auf die Kupplungsstelle des Antriebes und des Antriebsgehäuses nach Abnahme des Behältnisses oder vor dem Aufstecken und Kuppeln des Behältnisses,
- Fig. 3:: eine Seitenansicht des lösbar anbringbaren Behältnisses,
- Fig. 4:: einen Längsschnitt des Behältnisses gemäß der Linie A-A in Fig. 3 mit einem an der Welle für das Werkzeug angeordneten Kupplungsfortsatz,
- Fig. 5:: eine schaubildliche Darstellung des Behältnisses ohne seinen aufschraubbaren oder mittels Bajonettverschluss anbringbaren Deckel,
- Fig. 6:: in schaubildlicher Darstellung den Kupplungsfortsatz der Vorrichtung gemäß Fig. 4 und das dazu passende Kupplungsgegenstück gemäß Fig. 1 und 2,
- Fig. 7.: eine abgewandelte Ausführungsform des Kupplungsfortsatzes und des Gegenkupplungsstückes,
- Fig. 8:: einen Längsschnitt durch den lösbaren Deckel des Behältnisses, der auf das in Fig. 5 dargestellte Unterteil passt, sowie
- Fig. 9:: eine schaubildliche Seitenansicht eines in das Behältnis und dabei in dessen Deckel passenden, an der Unterseite aufgerauten Tellers zur Begrenzung des Mahlraumes.

Eine im Ganzen mit 1 bezeichnete Vorrichtung dient zum Zerkleinern oder Mahlen von Mahlgut, beispielsweise von harten, spröden oder versprödeten Partikeln und Stoffen, die einer genauen Analyse zugeführt werden sollen.

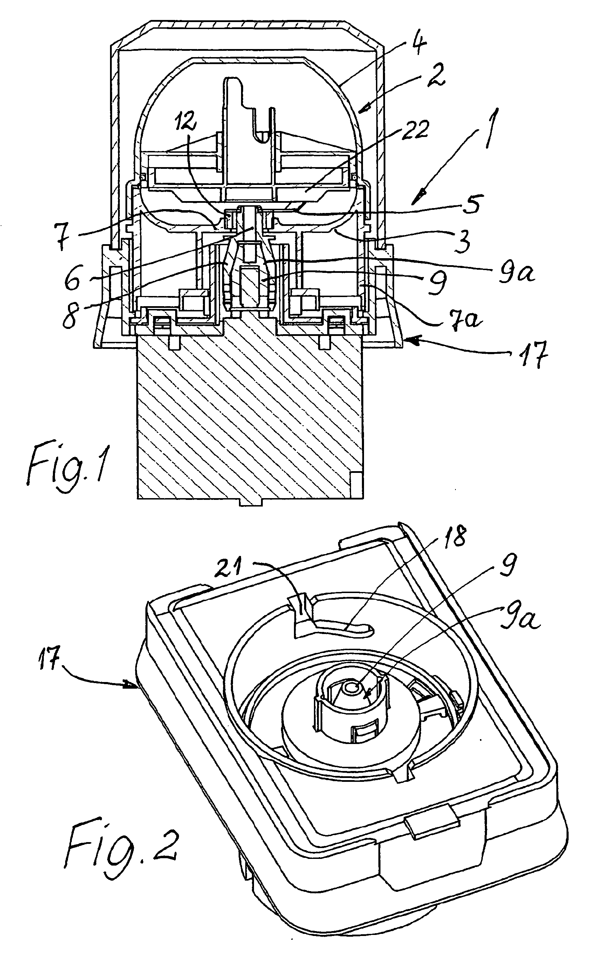

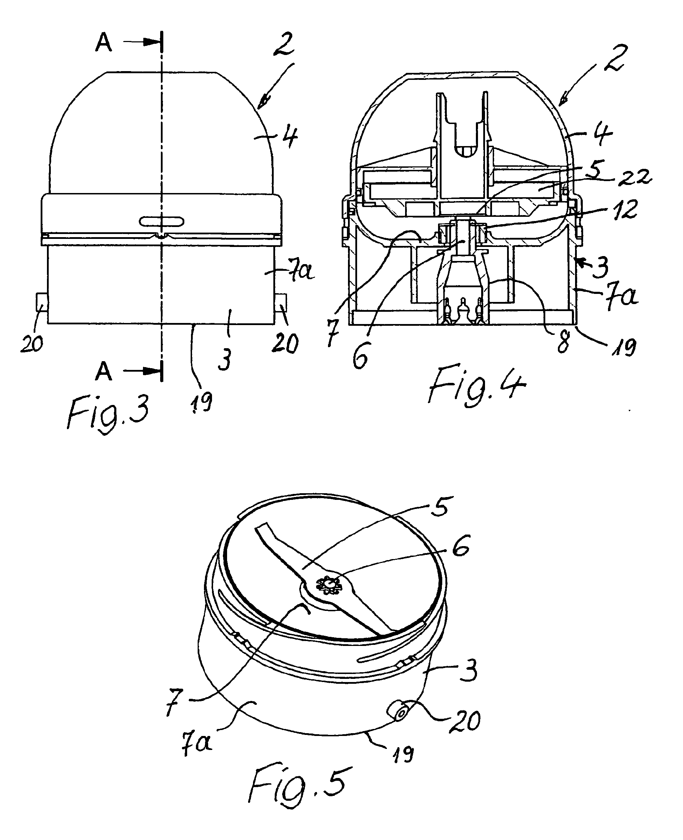

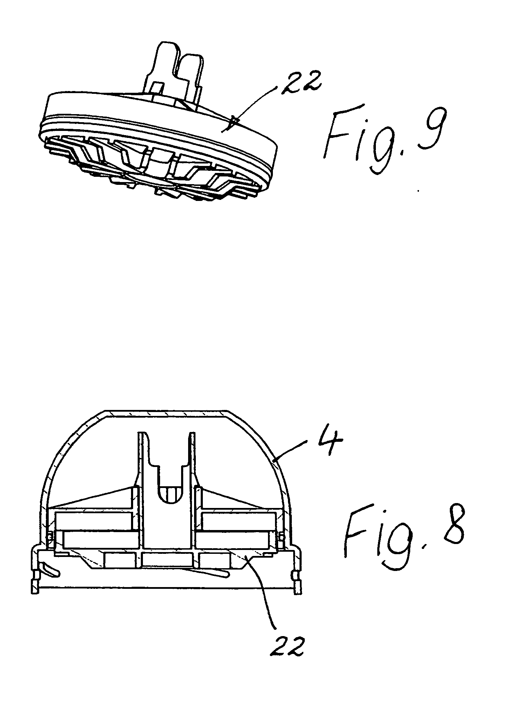

Zu der Vorrichtung 1 gehört ein in den Fig. 1 , 3 und 4 dargestelltes Behältnis 2 zur Aufnahme des Mahlgutes, wobei dieses Behältnis gemäß den Fig. 5 und 8 aus einem Unterteil 3 und einem damit verbindbaren oder verbundenen, haubenförmigen Deckel 4 in Gebrauchsstellung zusammengesetzt ist.

In dem Behältnis 2 ist ein während des Zerkleinerns oder Mahlens rotierendes Werkzeug 5 angeordnet, unter welchem in Gebrauchsstellung gemäß den Fig. 1 und 4 eine Welle 6 zum Kuppeln des Werkzeugs 5 mit einem Antrieb angeordnet ist.

Vor allem bei gleichzeitiger Betrachtung der Fig. 1, 2, 3 und 4 wird deutlich, dass das Behältnis 2 mit dem Werkzeug 5 zusammen mit dem noch nachstehend zu erläuternden Antrieb, womit das Werkzeug 5 in Rotation versetzt wird, kuppelbar ist und dass das Werkzeug 5 in dem Behältnis 2 in von dem Antrieb gelöster oder abgekuppelter Lage lose drehbar und erst in Gebrauchsstellung durch die Kupplung mit dem Antrieb drehfest verbunden und zentriert ist.

Vor allem Fig. 4 und 5 machen deutlich, dass das Werkzeug 5 in dem Behältnis 2 so lange lose drehbar ist, wie keine Verbindung zu einem Antrieb besteht.

Die an dem Werkzeug 5 angreifende Welle 6 verläuft im Ausführungsbeispiel durch den Boden 7 des Behältnisses 2 nach außen und im Ausführungsbeispiel in Gebrauchsstellung nach unten. Denkbar wäre auch eine Anordnung, bei welcher die Welle durch eine Wand nach außen verläuft.

Die Welle 6 trägt einen im Ganzen mit 8 bezeichneten Kupplungsfortsatz, der mit einem an dem Antrieb drehfest angeordneten Gegenkupplungsstück 9 (vgl. Fig.1, 2, 6 und 7) zentrierend und kraft- und formschlüssig zusammensteckbar ist.

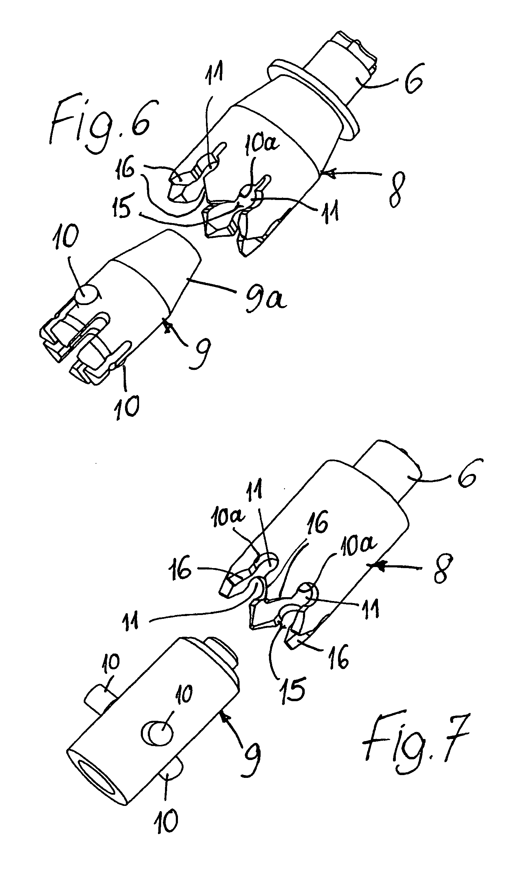

In den Fig. 6 und 7 sind jeweils ein Kupplungsfortsatz 8 und ein Gegenkupplungsstück 9 etwas unterschiedlicher Formgebung kurz vor ihrem Zusammenstecken dargestellt.

Bei dem Ausführungsbeispiel gemäß Fig. 1, 2, 4 und 6 sind der Kupplungsfortsatz 8 und das Gegenkupplungsstück 9 bereichsweise zylindrisch und dazu benachbart sich konisch verjüngend derart ausgebildet, dass in Gebrauchsstellung gemäß Fig. 1 Außenkonus und Innenkonus einerseits und die zylindrischen Bereiche andererseits einander am Umfang berühren und so eine formschlüssige Kupplung bilden.

Dabei erkennt man, dass der Kupplungsfortsatz 8 an der Welle 6 des Werkzeugs 5 als an seiner dem Werkzeug 5 abgewandten Stirnseite offener Hohlzylinder ausgebildet ist, der sich zu der Welle 6 hin verjüng, also im Bereich der Welle 6 seinen konischen Bereich hat. Das Gegenkupplungsstück 9 weist einen zu der Verjüngung in dem Kupplungsfortsatz 8 formschlüssig passendes Konusstück 9a auf, das koaxial an dem zylindrischen Bereich angeordnet ist, dessen Querschnitt dem größten Querschnitt dieses konischen Bereich 9 entspricht, sodass sich ein absatzloser Übergang von dem zylindrischen Bereich zu dem konischen Bereich 9a ergibt, den man gut in Fig. 6 erkennt. In gleicher Weise ist die Innenseite des Kupplungsfortsatzes 8 absatzlos gestaltet.

Bei den beiden Ausführungsbeispielen gemäß Fig. 6 und 7 sind der Kupplungsfortsatz 8 und das Gegenkupplungsstück 9 mittels nach außen oder radial vorstehenden Vorsprüngen 10 und dazu passenden, in axialer Richtung offenen, Hinterschneidungen 10a aufweisenden Aussparungen 11 verrastbar. Die zur Verrastung mit dem jeweiligen Vorsprung vorgesehene Aussparung 11 ist dabei an einer Stelle der Kupplung angeordnet, an der der Kupplungsfortsatz 8 und das Kupplungsgegenstück 9 unter einer gegenseitigen axialen Kraft zusammengehalten und also in Kupplungsposition zusammengedrückt und der den Kupplungsfortsatz 8 benachbarte Boden 7 des Behältnisses 2 mit einer die Welle 6 umfassende Dichtung 12 durch einen Hülsenfortsatz 7a an den Antrieb angedrückt sind.

Im Ausführungsbeispiel gemäß Fig. 6 erkennt man, dass das Gegenkupplungsstück 9 zwei radial abstehende Vorsprünge 10 mit im Ausführungsbeispiel kreisrundem Querschnitt und der Kupplungsfortsatz 8 als Aussparungen 11 Schlitze aufweist, die sich ein Einsteckrichtung erweitern, wobei die Erweiterung eine Abmessung etwa entsprechend der des Vorsprunges 10 hat und in Einsteckrichtung vor dem Vorsprung aufgrund der Hinterschneidung 11 eine rastend überwindbare Engstelle 15 gebildet ist. Die Aussparungen 11 an dem Kupplungsfortsatz 8 haben dabei Einlaufschrägen 16, die zu den Engstellen 15 führen, sodass die Kupplungsbewegung erleichtert ist.

Im Ausführungsbeispiel gemäß Fig. 6 ist vorgesehen, dass für einen Konus und eines sich verjüngende Innenöffnung aufweisende Kupplungsteile zwei radial vorstehende Vorsprünge 10 an dem Gegenkupplungsstück 9 vorgesehen sind.

Fig. 7 zeigt ein Ausführungsbeispiel, bei welchem der Kupplungsfortsatz 8 und das Gegenkupplungsstück 9 über ihre gesamte axiale Wirklänge mit gleichbeliebenden Querschnitten zusammenpassen und drei radial abstehende Vorsprünge 10 mit Aussparungen 11 in Form von Schlitzen und Öffnungen mit den entsprechenden Engstellen 15 beim Zusammenstecken verrastbar sind. Beide Lösungen ergeben die gewünschte und erforderliche statische Bestimmtheit.

Der schon erwähnte Antrieb, beispielsweise eine Elektromotor, ist im Ausführungsbeispiel in einem Gehäuse 17 angeordnet und das Behältnis 2 und dieses Gehäuse 17 sind lösbar verbindbar, damit das Behältnis 2 vollständig von dem Antrieb getrennt werden kann.

Die Verbindung des Behältnisses 2 und des Gehäuses 17 ist aus einer axialen Steckbewegung und einer wenigstens über einen Winkelbereich erfolgenden Drehbewegung zusammengesetzt, sodass diese Steckbewegung synchron mit dem Zusammenstecken des Kupplungsfortsatzes 8 mit dem Gegenkupplungsstück 9 erfolgt. Dabei ist für die Verbindung zwischen dem Behältnis 2 und dem Gehäuse 17 ein Bajonettverschluss vorgesehen, dessen Haltekurve 18 in Fig. 2 erkennbar ist.

Gemäß Fig. 3 und 5 sind an dem Behältnis 2 benachbart zu einem in Gebrauchsstellung unteren Rand 19 seines Hülsenfortsatzes 7a zwei radial abstehende, zu der Haltekurve 18 des Bajonettverschlusses passende Vorsprünge 20 angeordnet. Die Haltekurve 18 an dem Gehäuse 17 des Antriebs hat an ihrer Oberseite einen vertikalen Eintritt 21 und einen in Umfangsrichtung schräg verlaufenden Abschnitt, der dem wesentlichen Teil dieser Haltekurve 18 bildet. Die Vorsprünge 20 passen in den Eintritt 21 und in die Haltekurve 18, das heißt das Behältnis 2 und das Gehäuse 17 können zunächst etwa in vertikaler Richtung zusammengesteckt werden, wodurch die Vorsprünge 20 in die Eintritte 21 eingeführt werden, bis sie auf der Höhe der eigentlichen Haltekurve 18 zu liegen kommen, wonach eine Relativverdrehung diese Vorsprünge 20 in die Haltekurve 18 befördert und damit die axiale Fixierung beendet.

Die in Fig. 2 erkennbare Schrägung der Haltekurve 18 des Bajonettverschlusses reicht dabei über einen Umfangsbereich und außerdem über einen Höhenbereich, der der Einrastbewegung des Kupplungsfortsatzes 8 an dem Gegenkupplungsstück 9 entspricht, das heißt durch das Einstecken und weitere axiale Bewegen der Vorsprünge 20 mit Hilfe der Haltekurve 18 wird gleichzeitig die Verrastung von Kupplungsfortsatz 8 und Gegenkupplungsstück 9 im Sinne einer festen Kupplungsverbindung bewirkt oder vollendet. Dabei ist die Verrastung möglicherweise schon durch die Einsteck-Bewegung der Vorsprünge 20 in die Eintritte 21 vollzogen, sodass die Verdrehung und die Schräge der Haltekurve 18 eine zusätzliche axiale Haltekraft bewirken.

Im Bereich des Durchtritts der Welle 6 für das Werkzeug 5 ist als Dichtung 12 ein diesen Durchtritt abdichtender Dichtring vorgesehen, der beim Verbinden des Behältnisses 2 mit dem Gehäuse 17 oder auch schon vorher insbesondere durch das Werkzeug 5 in axialer Richtung beaufschlagt und beim Kuppeln so zusammengedrückt wird, dass die erforderliche Dichtwirkung besteht. Dieser Dichtring kann wenigstens teilweise aus Schaumstoff bestehen und zumindest an der dem Werkzeug 5 zugewandten und mit diesem in Berührung befindlichen Stirnseite reibungsarm beispielsweise durch Beschickung oder Beflockung, ausgebildet sein.

In den Fig. 1,4 und 8 erkennt man noch, dass in dem Behältnis 2 oberhalb dem das Mahlgut aufnehmenden und das Werkzug 5 aufweisenden Raum ein den Innenraum des Behältnisses 2 begrenzender oder verkleinernder, in Ausgangslage vorzugsweise auf dem Mahlgut ruhender Teller 22 vorgesehen ist, der in Fig. 9 separat dargestellt ist. Dabei kann für diesen über oder auf dem Mahlgut befindlichen Teller 22 in dem Behältnis ein sein Absinken nach unten begrenzender Anschlag vorgesehen sein. Die dem Mahlgut zugewandte Seite dieses Kellers 22 hat gemäß Fig. 9 eine Profilierung oder Aufrauung zur Unterstützung des Mahl- und Zerkleinerungsvorganges.

Da der Deckel 4 mit dem Unterteil 3 des Behältnisses 2 lösbar verbunden ist, kann möglicherweise dieser Deckel 4 sogar wiederverwendet werden, wenn das Unterteil 3 nur einmal benutzt und ohne Reinigung des Werkzeugs 5 und der Dichtung 12 entsorgt werden soll.

Die Vorrichtung 1 zum Zerkleinern oder Mahlen weist ein Behältnis 2 zur Aufnahme des Mahlguts und ein in diesem Behältnis 2 während der Bearbeitung rotierendes Werkzeug 5 sowie einen Antrieb für dieses Werkzeug 5 auf. Das Behältnis 2 mit dem Werkzeug 5 ist lösbar mit dem Antrieb kuppelbar, das heißt das Behältnis 2 mit dem Werkzeug 5 muss nach einem Mahlvorgang nicht gereinigt werden, sondern kann durch ein neues derartiges Behältnis 2 ersetzt werden. Dazu ist das in dem Behältnis 2 befindliche Werkzeug 5 in von dem Antrieb gelöster oder abgekuppelter Lage oder vor einem entsprechenden Kupplungsvorgang lose drehbar und in Gebrauchsstellung durch die Kupplung mit dem Antrieb drehfest verbunden und zentriert.

## Patentansprüche

1. Vorrichtung (1) zum Zerkleinern oder Mahlen von Mahlgut, insbesondere von harten, spröden oder versprödeten Partikeln oder Stoffen, mit einem Behältnis (2) zur Aufnahme des Mahlgutes und mit einem in diesem Behältnis (2) während des Zerkleinerns oder Mahlens rotierenden Werkzeug (5) sowie mit einem Antrieb für dieses Werkzeug (5), wobei das Behältnis (2) mit dem Werkzeug (5) zusammen lösbar mit dem Antrieb kuppelbar ist und das Werkzeug (5) in dem Behältnis (2) in von dem Antrieb gelöster oder abgekuppelter Lage angeordnet und/oder lose drehbar und in Gebrauchsstellung durch die Kupplung mit dem Antrieb drehfest verbunden und zentriert ist, **dadurch gekennzeichnet, dass** eine an dem Werkzeug (5) angreifende Welle (6) durch den Boden oder eine Wand des Behältnisses (2) nach außen oder unten verläuft und einen Kupplungsfortsatz (8) hat oder trägt, der mit einem an dem Antrieb drehfest angeordneten Gegenkupplungsstück (9)zentrierend und kraft- und/oder formschlüssig zusammensteckbar ist, dass der Kupplungsfortsatz (8) und das Gegenkupplungsstück (9) mittels nach außen oder radial vorstehenden Vorsprüngen (10) und dazu passenden, in axialer Richtung offenen, Hinterschneidungen (10a) aufweisenden Aussparungen (11) verrastbar sind und dass die zur Verrastung mit dem jeweiligen Vorsprung vorgesehene Aussparung (11) an einer Stelle der Kupplung angeordnet ist, bei der der Kupplungsfortsatz (8) und das Gegenkupplungsstück (9) unter einer gegenseitigen axialen Kraft zusammengehalten und der dem Kupplungsfortsatz (8) benachbarte Boden-oder Wandbereich des Behältnisses (2) an eine die Welle (6) umfassende Dichtung (12) angedrückt sind.

2. Vorrichtung nach Anspruch 1, **dadurch gekennzeichnet, dass** das Werkzeug (5) gegenüber dem Behältnis (2) ungelagert ist.

3. Vorrichtung nach Anspruch 1, **dadurch gekennzeichnet, dass** der Kupplungsfortsatz (8) und das Gegenkupplungsstück (9) zumindest bereichsweise zylindrisch und dazu benachbart sich verjüngend oder konisch ausgebildet sind derart, dass in Gebrauchsstellung Außenkonus und Innenkonus einerseits und die zylindrischen Bereiche andererseits einander zumindest über einen Teil ihres Umfanges berühren.

4. Vorrichtung einem der Ansprüche 1 bis 3, **dadurch gekennzeichnet, dass** der Kupplungsfortsatz (8) an der Welle (6) des Werkzeugs (5) als an seiner dem Werkzeug (5) abgewandten Stirnseite offener Hohlzylinder ausgebildet ist, der sich zu der Welle (6) hin verjüngt, und dass das Gegenkupplungsstück (9) einen zu der Verjüngung in dem Kupplungsfortsatz (8) passendes Konusstück (9a) aufweist, das koaxial an einem zylindrischen Bereich angeordnet ist, dessen Querschnitt etwa dem größten Querschnitt des konischen Bereichs (9a) entspricht.

5. Vorrichtung einem der Ansprüche 1 bis 4, **dadurch gekennzeichnet, dass** das Gegenkupplungsstück (9) wenigstens zwei radial abstehende Vorsprünge (10) mit vorzugsweise kreisrundem Querschnitt und der Kupplungsfortsatz (8) Schlitze aufweist, die sich in Einsteckrichtung erweitern, wobei die Aussparung (11) eine Abmessung etwa entsprechend einem Vorsprung (10) hat und in Einsteckrichtung vor dem Vorsprung eine rastend überwindbare Engstelle (15) angeordnet ist.

6. Vorrichtung nach einem der Ansprüche 1 bis 5, **dadurch gekennzeichnet, dass** die Aussparungen (11) an dem Kupplungsfortsatz (8) Einlaufschrägen (16) haben, die zu den Engstellen führen.

7. Vorrichtung nach einem der Ansprüche 1 bis 6, **dadurch gekennzeichnet, dass** für einen Konus und eine sich verjüngende Innenöffnung aufweisende Kupplungsteile zwei radial vorstehende Vorsprünge (10) an dem Gegenkupplungsstück (9) vorgesehen sind.

8. Vorrichtung nach einem der Ansprüche 1 bis 7, **dadurch gekennzeichnet, dass** der Kupplungsfortsatz (8) und das Gegenkupplungsstück (9) über ihre gesamte Wirklänge mit gleichbleibenden Querschnitten zusammenpassen und drei radial abstehende Vorsprünge (10) mit Aussparungen (11) beim Zusammenstecken verrastbar sind.

9. Vorrichtung nach einem der Ansprüche 1 bis 8, **dadurch gekennzeichnet, dass** der Antrieb in einem Gehäuse (17) angeordnet und das Behältnis (2) und dieses Gehäuse (17) lösbar verbindbar sind.

10. Vorrichtung nach Anspruch 9, **dadurch gekennzeichnet, dass** die Verbindung des Behältnisses (2) und des Gehäuses (17) aus einer ersten axialen Steckbewegung und einer wenigstens über einen Winkelbereich erfolgenden Drehbewegung zusammengesetzt ist und dass die Steckbewegung synchron mit dem Zusammenstecken des Kupplungsfortsatzes (8) mit dem Gegenkupplungsstück (9) ist.

11. Vorrichtung nach einem der Ansprüche 9 oder 10, **dadurch gekennzeichnet, dass** für die Verbindung zwischen dem Behältnis (2) und dem Gehäuse (17) ein Bajonettverschluss vorgesehen ist.

12. Vorrichtung nach Anspruch 11, **dadurch gekennzeichnet, dass** an dem Behältnis (2) benachbart zu einem in Gebrauchsstellung unteren Rand (19 wenigstens ein radial abstehender, zu der Haltekurve (18) des Bajonettverschlusses passender Vorsprung (20) angeordnet ist und dass die Haltekurve (18) an dem Gehäuse (17) des Antriebs einen vertikalen Eintritt (21) und einen in Umfangsrichtung insbesondere schräg verlaufenden Abschnitt hat.

13. Vorrichtung nach Anspruch 12, **dadurch gekennzeichnet, dass** die Schrägung der Haltekurve (18) des Bajonettverschlusses über einen Umfangsbereich und dabei über einen Höhenbereich verläuft, der der Einrastbewegung des Kupplungsfortsatzes (8) an dem Gegenkupplungsstück (9) entspricht.

14. Vorrichtung nach einem der Ansprüche 1 bis 13, **dadurch gekennzeichnet, dass** im Bereich des Durchtritts der Welle (6) für das Werkzeug (5) als Dichtung (12) ein diesen Durchtritt beaufschlagender und umschließender Dichtring vorgesehen ist, der beim Verbinden des Behältnisses (2) mit dem Gehäuse (17) des Antriebs insbesondere durch das Werkzeug (5) in axialer Richtung beaufschlagbar und/oder zusammendrückbar ist.

15. Vorrichtung nach Anspruch 14, **dadurch gekennzeichnet, dass** der Dichtring wenigstens teilweise aus Schaumstoff besteht und an wenigstens einer Stirnseite oder an der dem Werkzeug (5) zugewandten Stirnseite reibungsarm, beispielsweise durch Beschichtung oder Beflockung, ausgebildet ist.

16. Vorrichtung nach einem der Ansprüche 1 bis 15, **dadurch gekennzeichnet, dass** in dem Behältnis (2) oberhalb dem das Mahlgut aufnehmenden und das Werkzeug (5) aufweisenden Raum ein den Innenraum des Behältnisses (2) begrenzender, in Ausgangslage vorzugsweise auf dem Mahlgut ruhender Teller (22) vorgesehen ist.

17. Vorrichtung nach Anspruch 16, **dadurch gekennzeichnet, dass** für den über oder auf dem Mahlgut befindlichen Teller (22) ein sein Absinken nach unten begrenzender Anschlag vorgesehen ist.

18. Vorrichtung nach Anspruche 16 bis 17, **dadurch gekennzeichnet, dass** die dem Mahlgut zugewandte Seite des Tellers (22) Profilierungen oder Aufrauungen oder dergleichen Verformungen zur Unterstützung des Mahloder Zerkleinerungsvorgangs aufweist.

## Claims

1. Device (1) for comminuting or grinding material to be ground, in particular hard, brittle or embrittled particles or substances, having a container (2) for receiving the material to be ground and having a tool (5), which rotates in said container (2) during comminution or grinding, and having a drive for said tool (5), wherein the container (2) together with the tool (5) can be releasably coupled to the drive, and the tool (5) is disposed in the container (2) in a position released or decoupled from the drive and/or is loosely rotatable and, in the usage position, is connected for conjoint rotation with the drive and centred by the coupling, **characterised in that** a shaft (6) engaging with the tool (5) extends outwards or downwards through the bottom or a wall of the container (2) and has or carries a coupling protrusion (8) which can be plugged together in a centring and non-positive or positive manner with a counter coupling piece (9) disposed on the drive for conjoint rotation therewith, that the coupling protrusion (8) and the counter coupling piece (9) can be latched by means of outwardly or radially protruding projections (10) and matching apertures (11) which are open in the axial direction and have undercuts (10a), and that the aperture (11) provided for latching with the respective projection is disposed at a point of the coupling at which the coupling protrusion (8) and the counter coupling piece (9) are held together by a reciprocal axial force, and the bottom region or wall region of the container (2) adjacent to the coupling protrusion (8) are pressed against a seal (12) surrounding the shaft (6).

2. Device as claimed in claim 1, **characterised in that** the tool (5) is unsupported with respect to the container (2).

3. Device as claimed in claim 1, **characterised in that** the coupling protrusion (8) and the counter coupling piece (9) are cylindrical at least in regions and, adjacent thereto, are formed in a tapering or conical manner such that, in the usage position, the external cone and internal cone on the one hand and the cylindrical regions on the other hand contact one another at least over a part of their periphery.

4. Device as claimed in any one of claims 1 to 3, **characterised in that** the coupling protrusion (8) on the shaft (6) of the tool (5) is formed as a hollow cylinder which is open at the end face thereof remote from the tool (5) and tapers towards the shaft (6), and that the counter coupling piece (9) has a conical piece (9a) which fits the tapering in the coupling protrusion (8) and is disposed coaxially on a cylindrical region, the cross-section of which corresponds approximately to the largest cross-section of the conical region (9a).

5. Device as claimed in any one of claims 1 to 4, **characterised in that** the counter coupling piece (9) has at least two radially protruding projections (10) with a preferably circular cross-section, and the coupling protrusion (8) has slits which widen in the insertion direction, wherein the aperture (11) has dimensions which correspond approximately to a projection (10), and a constriction (15) which can be overcome in a latching manner is disposed upstream of the projection in the insertion direction.

6. Device as claimed in any one of claims 1 to 5, **characterised in that** the apertures (11) on the coupling protrusion (8) have run-in slopes (16) which lead to the constrictions.

7. Device as claimed in any one of claims 1 to 6, **characterised in that** for a cone and coupling parts comprising a tapering inner opening, two radially protruding projections (10) are provided on the counter coupling piece (9).

8. Device as claimed in any one of claims 1 to 7, **characterised in that** the coupling protrusion (8) and the counter coupling piece (9) fit together over their entire effective length with constant cross-sections and three radially protruding projections (10) can be latched with apertures (11) during plugging together.

9. Device as claimed in any one of claims 1 to 8, **characterised in that** the drive is disposed in a housing (17) and the container (2) and said housing (17) can be releasably connected.

10. Device as claimed in claim 9, **characterised in that** the connection of the container (2) and of the housing (17) is made up of a first axial inserting movement and a turning movement effected at least over an angular region, and that the inserting movement is synchronous with the coupling protrusion (8) being plugged together with the counter coupling piece (9).

11. Device as claimed in any one of claims 9 or 10, **characterised in that** a bayonet fitting is provided for the connection between the container (2) and the housing (17).

12. Device as claimed in claim 11, **characterised in that** on the container (2), adjacent to an edge (19) which is at the bottom in the usage position, at least one radially protruding projection (20) matching the retaining curve (18) of the bayonet fitting is disposed, and that the retaining curve (18) on the housing (17) of the drive has a vertical entry point (21) and a portion extending particularly in an inclined manner in the peripheral direction.

13. Device as claimed in claim 12, **characterised in that** the inclination of the retaining curve (18) of the bayonet fitting extends over a peripheral region and thereby over a vertical region which corresponds to the latching-in movement of the coupling protrusion (8) on the counter coupling piece (9).

14. Device as claimed in any one of claims 1 to 13, **characterised in that** in the region of the passage of the shaft (6) for the tool (5), a sealing ring acting on and surrounding said passage is provided as a seal (12), said sealing ring can be acted upon and/or compressed in particular by the tool (5) in the axial direction during connection of the container (2) to the housing (17) of the drive.

15. Device as claimed in claim 14, **characterised in that** the sealing ring consists at least partly of foam material and is formed to be low in friction, e.g. by means of a coating or flocking, on at least one end face or on the end face facing the tool (5).

16. Device as claimed in any one of claims 1 to 15, **characterised in that** in the container (2), above the space receiving the material to be ground and comprising the tool (5), there is provided a plate (22) which defines the interior space of the container (2) and, in the starting position, is preferably in contact with the material to be ground.

17. Device as claimed in claim 16, **characterised in that** a stop is provided for the plate (22) located over or on the material to be ground and limits the extent to which said plate sinks.

18. Device as claimed in claims 16 to 17, **characterised in that** the side of the plate (22) facing the material to be ground has profiles or roughened areas or similar deformations to assist the grinding or comminuting process.

## Revendications

1. Dispositif (1) pour la fragmentation ou le broyage de matière à broyer, en particulier de particules ou de substances dures, fragiles ou fragilisées, avec un récipient (2) destiné à contenir la matière à broyer et avec un outil (5) tournant dans ce récipient (2) pendant la fragmentation ou le broyage, ainsi qu'avec un entraînement pour cet outil (5), dans lequel le récipient (2) avec l'outil (5) peut être couplé de façon séparable à l'entraînement et l'outil (5) est disposé dans le récipient (2) en position séparée ou découplée de l'entraînement et/ou est relié de façon librement rotative et en position d'utilisation de façon solidaire en rotation à l'entraînement et centré, **caractérisé en ce qu'**un arbre (6) agissant sur l'outil (5) s'étend vers l'extérieur ou vers le bas à travers le fond ou une paroi du récipient (6) et comporte ou porte un prolongement d'accouplement (8), qui peut s'emmancher en se centrant par adhérence et/ou par emboîtement avec une pièce d'accouplement opposée (9) disposée de façon solidaire en rotation sur l'entraînement, **en ce que** le prolongement d'accouplement (8) et la pièce d'accouplement opposée (9) peuvent être encliquetés au moyen de saillies (10) saillantes vers l'extérieur ou radialement et de découpes (11) s'ajustant à celles-ci, ouvertes en direction axiale, présentant des contre-dépouilles (10a), et **en ce que** la découpe (11) prévue pour l'encliquetage avec la saillie respective est disposée en un endroit de l'accouplement, auquel le prolongement d'accouplement (8) et la pièce d'accouplement opposée (9) sont solidarisés par une force axiale mutuelle et la région de fond ou de paroi du récipient (2) voisine du prolongement d'accouplement (8) est pressée sur un joint d'étanchéité (12) entourant l'arbre (6).

2. Dispositif selon la revendication 1, **caractérisé en ce que** l'outil (5) n'est pas supporté par rapport au récipient (2).

3. Dispositif selon la revendication 1, **caractérisé en ce que** le prolongement d'accouplement (8) et la pièce d'accouplement opposée (9) sont au moins localement cylindriques et au voisinage de celle-ci sont de forme décroissante ou conique, de telle manière qu'en position d'utilisation le cône extérieur et le cône intérieur d'une part et les régions cylindriques d'autre part se touchent mutuellement au moins sur une partie de leur périphérie.

4. Dispositif selon l'une quelconque des revendications 1 à 3, **caractérisé en ce que** le prolongement d'accouplement (8) sur l'arbre (6) de l'outil (5) est configuré en un cylindre creux ouvert à sa face frontale située à l'opposé de l'outil (5), qui va en diminuant en direction de l'arbre (6), et **en ce que** la pièce d'accouplement opposée (9) présente une pièce conique (9a) s'ajustant au rétrécissement dans le prolongement d'accouplement (8), qui est disposée de façon coaxiale à une région cylindrique, dont la section transversale correspond environ à la plus grande section transversale de la région conique (9a).

5. Dispositif selon l'une quelconque des revendications 1 à 4, **caractérisé en ce que** la pièce d'accouplement opposée (9) présente au moins deux saillies (10) saillantes radialement avec une section transversale de préférence ronde et le prolongement d'accouplement (8) présente des fentes, qui s'élargissent dans la direction d'emmanchement, dans lequel la découpe (11) a une dimension correspondant environ à une saillie (10) et un étranglement (15) franchissable par encliquetage est disposé avant la saillie dans la direction d'emmanchement.

6. Dispositif selon l'une quelconque des revendications 1 à 5, **caractérisé en ce que** les découpes (11) sur le prolongement d'accouplement (8) comportent des rampes d'entrée (16) qui conduisent aux étranglements.

7. Dispositif selon l'une quelconque des revendications 1 à 6, **caractérisé en ce qu'**il est prévu pour des pièces d'accouplement présentant un cône et une ouverture intérieure décroissante deux saillies (10) saillantes radialement sur la pièce d'accouplement opposée (9).

8. Dispositif selon l'une quelconque des revendications 1 à 7, **caractérisé en ce que** le prolongement d'accouplement (8) et la pièce d'accouplement opposée (9) s'ajustent l'un à l'autre sur toute leur longueur active avec des sections transversales constantes et trois saillies (10) saillantes radialement peuvent être encliquetées avec des découpes (11) lors de l'opération d'emmanchement.

9. Dispositif selon l'une quelconque des revendications 1 à 8, **caractérisé en ce que** l'entraînement est disposé dans un boîtier (17) et le récipient (2) et ce boîtier (17) peuvent être assemblés de façon séparable.

10. Dispositif selon la revendication 9, **caractérisé en ce que** l'assemblage du récipient (2) et du boîtier (17) se compose d'un premier mouvement d'introduction axial et d'un mouvement de rotation effectué au moins sur une plage angulaire et **en ce que** le mouvement d'introduction est synchrone avec l'emmanchement du prolongement d'accouplement (8) avec la pièce d'accouplement opposée (9).

11. Dispositif selon l'une des revendications 9 ou 10, **caractérisé en ce qu'**il est prévu une fermeture à baïonnette pour l'assemblage entre le récipient (2) et le boîtier (17).

12. Dispositif selon la revendication 11, **caractérisé en ce qu'**au moins une saillie (20) saillante radialement qui s'ajuste à la coulisse de maintien (18) de la fermeture à baïonnette est disposée sur le récipient (2) à proximité d'un bord (19) inférieur en position d'utilisation et **en ce que** la coulisse de maintien (18) comporte sur le boîtier (17) de l'entraînement une entrée verticale (21) et une partie s'étendant en direction périphérique, en particulier en oblique.

13. Dispositif selon la revendication 12, **caractérisé en ce que** l'obliquité de la coulisse de maintien (18) de la fermeture à baïonnette s'étend sur une plage périphérique et en l'occurrence sur une plage de hauteur, qui correspond au mouvement d'encliquetage du prolongement d'accouplement (8) sur la pièce d'accouplement opposée (9).

14. Dispositif selon l'une quelconque des revendications 1 à 13, **caractérisé en ce qu'**il est prévu comme joint d'étanchéité (12) dans la région du passage de l'arbre (6) pour l'outil (5) un anneau d'étanchéité occupant et entourant ce passage, qui peut être écrasé et/ou comprimé en direction axiale en particulier par l'outil (5) lors de l'assemblage du récipient (2) avec le boîtier (17) de l'entraînement.

15. Dispositif selon la revendication 14, **caractérisé en ce que** l'anneau d'étanchéité se compose au moins en partie de mousse et est réalisé à faible frottement sur au moins une face frontale ou sur la face frontale tournée vers l'outil (5), par exemple par revêtement ou flocage.

16. Dispositif selon l'une quelconque des revendications 1 à 15, **caractérisé en ce qu'**il est prévu dans le récipient (2), au-dessus de la chambre contenant la matière à broyer et présentant l'outil (5), un plateau (22) délimitant l'espace intérieur du récipient (2) et reposant en position initiale de préférence sur la matière à broyer.

17. Dispositif selon la revendication 16, **caractérisé en ce qu'**il est prévu pour le plateau (22) se trouvant sur ou au-dessus de la matière à broyer une butée limitant sa descente vers le bas.

18. Dispositif selon les revendications 16 à 17, **caractérisé en ce que** le côté du plateau (22) tourné vers la matière à broyer présente des profilages ou des reliefs ou des déformations similaires pour accentuer l'opération de broyage ou de fragmentation.
